(19)

Europäisches
Patentamt
European
Patent Office
Office européen
des brevets

(11) **EP 2 500 374 A1**

(12) **EUROPEAN PATENT APPLICATION**
published in accordance with Art. 153(4) EPC

(43) Date of publication:
**19.09.2012 Bulletin 2012/38**

(51) Int Cl.:
***C08J 9/00*** *(2006.01)*   ***H01G 9/02*** *(2006.01)*
***H01M 2/16*** *(2006.01)*

(21) Application number: **10828156.9**

(22) Date of filing: **21.09.2010**

(86) International application number:
**PCT/JP2010/066297**

(87) International publication number:
**WO 2011/055596 (12.05.2011 Gazette 2011/19)**

(84) Designated Contracting States:
**AL AT BE BG CH CY CZ DE DK EE ES FI FR GB
GR HR HU IE IS IT LI LT LU LV MC MK MT NL NO
PL PT RO SE SI SK SM TR**

(30) Priority: **09.11.2009 JP 2009255731**

(71) Applicant: **Toray Industries, Inc.
Tokyo 103-8666 (JP)**

(72) Inventors:
• **IKOMA, Kei
Otsu-shi
Shiga 520-8558 (JP)**

• **KUMA, Takuya
Otsu-shi
Shiga 520-8558 (JP)**
• **OHKURA, Masatoshi
Otsu-shi
Shiga 520-8558 (JP)**

(74) Representative: **Webster, Jeremy Mark
Mewburn Ellis LLP
33 Gutter Lane
London
EC2V 8AS (GB)**

(54) **POROUS FILM AND ELECTRICITY STORAGE DEVICE**

(57)     The porous film of the present invention has an absorbing height of an electrolysis solution of 10 to 60 mm in at least one direction of the film's machine direction or transverse direction, wherein the absorbing height being measured after 30 minutes from the start of the absorption of the electrolysis solution, and a tensile strength at break in the machine direction of not less than 65 MPa. The porous film of the present invention provides a porous film that has excellent absorption properties for an electrolysis solution and, when used as a separator, exhibits excellent battery properties and workability.

**EP 2 500 374 A1**

**Description**

TECHNICAL FIELD

The present invention relates to a porous film and an electric storage device. More particularly, the present invention relates to a porous film that can be suitably used as a separator used in a nonaqueous solvent battery or in a capacitor, which porous film has excellent absorption properties for an electrolysis solution and, when used as a separator, exhibits excellent battery properties and workability, and to an electric storage device using the same as a separator.

BACKGROUND ART

Nonaqueous solvent batteries such as a lithium battery and a lithium ion battery use as an electrolysis solution an organic solvent, which has a problem of less safety against the heat generated in the battery than an aqueous solvent in an aqueous battery. Therefore, to improve the safety of nonaqueous solvent batteries, particularly of a lithium ion battery with a high energy density, separators using a microporous membrane made of an olefinic material typified by polyethylene have been conventionally used.

In recent years, large batteries such as batteries for hybrid vehicles (hereinafter referred to as HEV) and tool batteries have increased the output power, and their temperature rapidly increases to a temperature higher than 130°C; therefore the function to shut down at an appropriate temperature (about 130°C) is not necessarily demanded, and high safety is demanded. Further, in batteries for HEV, it is also important to ensure a long service life as long as 10 years or more and further stringent safety.

PRIOR ART DOCUMENTS

PATENT DOCUMENTS

For example, in Patent Documents 1 and 2, using a separator using polyethylene as a separator for nonaqueous solvent batteries such as a lithium ion battery is proposed.

For example, in Patent Documents 3 and 4, a separator using a porous membrane of polypropylene which has higher heat resistance than that of polyethylene is proposed.

For example, in Patent Document 5, using as a separator a polypropylene nonwoven fabric that has excellent absorption properties and heat resistance and is suitable for high-power uses such as a large battery is also proposed.

For example, in Patent Document 6, laminating a polyolefin porous film with a porous film using a resin having a high softening point is proposed.

For example, in Patent Document 7, applying an organic particle layer or an inorganic particle layer having a high softening point to the surface of a porous substrate is proposed.

Patent Document 1: JP 11-130899 A
Patent Document 2: JP 11-130900 A
Patent Document 3: JP 01-103634 A
Patent Document 4: JP 2008-248231 A
Patent Document 5: JP 60-52 A
Patent Document 6: JP 2006-269359 A
Patent Document 7: JP 2007-273443 A

SUMMARY OF THE INVENTION

PROBLEMS TO BE SOLVED BY THE INVENTION

The prior art in Patent Documents 1 and 2 provides excellent long-term stability such as cycle characteristics but low absorption properties, which can prolong the injection time of an electrolyte and reduce the battery assembling workability. The prior art in Patent Documents 1 and 2 also provides low porosity and air permeability and is not suitable for batteries for high power use such as batteries for HEV. The separator using polyethylene has such poor heat resistance that it readily causes shrinkage at a temperature of 140°C or lower in a high-temperature test of a battery to thereby generate the heat due to a short circuit between electrodes, which was problematic.

The prior art in Patent Documents 3 and 4 provides low absorption properties, which can prolong the injection time of an electrolyte and reduce the battery assembling workability. Further, a porous membrane with high absorption properties has low strength in the machine direction because of the high porosity and high air permeability, and therefore the process passability and battery workability can be reduced in a process, for example, in which the porous membrane is passed through rollers and wound under high tension with pressure in the thickness direction.

In the prior art in Patent Document 5, since a nonwoven fabric composed of fibers is used as a substrate, it has a large average pore size of about a few μm. Therefore, it is suggested that it is very likely that it has defects due to through holes and that a slight short circuit readily occurs, and an initial failure at battery winding readily occurs, so that such a long service life as that of batteries for HEV and further stringent safety cannot be sufficiently guaranteed. Further, there is also a problem of going against the trend of times toward miniaturization and weight saving of batteries, because an increase in film thickness and an increase in volume are inevitable as long as a nonwoven fabric is used.

The prior art in Patent Document 6 provides low absorption properties, which can prolong the injection time of an electrolyte and reduce the battery assembling workability. Further, the lamination of two kinds of films can increase the thickness or increase the processing cost.

The prior art in Patent Document 7 provides improved absorption properties due to an organic particle layer or an inorganic particle layer but low porosity and air permeability, and therefore is not suitable for batteries for high power use such as batteries for HEV.

An object of the present invention is to solve the problems described above. Thus, an object of the present invention is to provide a porous film that has excellent absorption properties for an electrolysis solution and, when used as a separator, exhibits excellent battery properties and workability.

MEANS FOR SOLVING THE PROBLEMS

The object of the present invention is achieved by the porous film having a absorbing height of an electrolysis solution of not less than 10 mm in at least one direction of the film's machine direction or transverse direction, wherein the absorbing height being measured after 30 minutes from the start of the absorption of the electrolysis solution, and a tensile strength at break in the machine direction of not less than 65 MPa.

The porous film of the present invention preferably comprises a polyolefin resin.

The porous film of the present invention preferably has a ratio of the absorbing height in the film's transverse direction to the absorbing height in the machine direction of 0.7 to 1.3, wherein the absorbing height being measured after 30 minutes from the start of the absorption of the electrolysis solution.

The porous film of the present invention preferably has a absorbing height of an electrolysis solution of 3 to 60 mm in at least one direction of the film's machine direction or transverse direction, wherein the absorbing height being measured after 1 minute from the start of the absorption of the electrolysis solution.

The porous film of the present invention preferably has a laminated constitution comprising a surface layer and an inner layer, wherein said surface layer is an absorption layer having a absorbing height of an electrolysis solution of 15 to 60 mm in at least one direction of the film's machine direction or transverse direction, the absorbing height being measured after 30 minutes from the start of the absorption of the electrolysis solution, and said inner layer is a strength retaining layer.

The porous film of the present invention preferably has a resistance of air permeability of 10 to 400 sec/100 ml.

The porous film of the present invention preferably has a porosity of 50 to 90%.

In the case where the porous film of the present invention contains a polyolefin resin, the β-crystal formability of the polyolefin resin is preferably 50 to 90%.

The porous film of the present invention preferably has a tensile strength at break in the machine direction of not less than 70 MPa.

The porous film of the present invention is preferably used as an electric storage device separator.

The electric storage device of the present invention preferably uses the above-described porous film as an electric storage device separator.

The electric storage device of the present invention is preferably a lithium ion battery.

EFFECTS OF THE INVENTION

The present invention provides a porous film that has excellent absorption properties for an electrolysis solution and, when used as a separator, exhibits excellent battery properties and workability.

BRIEF DESCRIPTION OF THE DRAWINGS

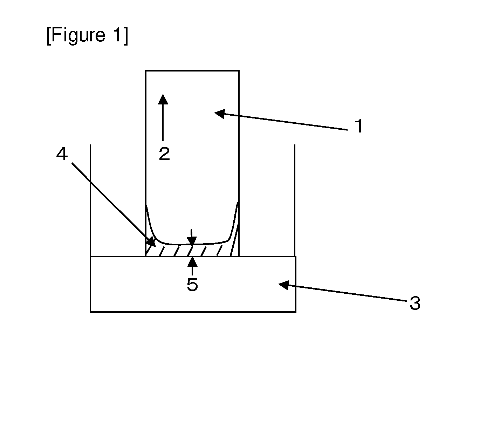

Figure 1 shows the method of measuring a absorbing height of an electrolysis solution among the properties of the porous film of the present invention.

BEST MODE FOR CARRYING OUT THE INVENTION

The porous film in the present invention refers to a film having through holes that penetrate both surfaces of the film and have air permeability. A Resin contained in the porous film may be any of a polyolefin resin, polycarbonate, polyamide, polyimide, polyamide-imide, aromatic polyamide, a fluorine resin, and the like, and a polyolefin resin is desirable from the standpoint of heat resistance, moldability, reduction in production cost, chemical resistance, resistance to oxidation/reduction, and the like.

Examples of monomer components that constitute the above-described polyolefin resin include, for example, ethylene, propylene, 1-butene, 1-pentene, 3-methylpentene-1, 3-methyl-1-butene, 1-hexene, 4-methyl-1-pentene, 5-ethyl-1-hexene, 1-heptene, 1-octene, 1-decene, 1-dodecene, 1-tetradecene, 1-hexadecene, 1-heptadecene, 1-octadecene, 1-eicosene, vinylcyclohexene, styrene, allyl benzene, cyclopentene, norbornene, and 5-methyl-2-norbomene. Examples include these homopolymers, copolymers of at least two selected from the above-described monomer components, and blends of such homopolymers and copolymers, but are not limited thereto. Besides the above-described monomer components, for example, vinyl alcohol, maleic anhydride, and the like may be copolymerized or graft polymerized, but these are non-limiting examples.

Among the above, as shown in the reference (JP 2008-106237 A), a polyethylene resin is preferred from the standpoint of absorption properties for nonaqueous electrolysis solution, and a polypropylene resin can be insufficient. However, from the standpoint of heat resistance, air permeability, and porosity, a polypropylene resin is preferred, and a polyethylene resin can be insufficient.

In the present invention, heat-resistance, which is an advantage of a polypropylene separator, and absorption properties for a nonaqueous electrolysis solution, which is a problem of the present separator, can be achieved simultaneously. To simultaneously achieve the above-described properties using a polypropylene separator, it is important for the pore structure to be a structure that readily sucks a nonaqueous electrolysis solution. Specifically, it is preferable to be a structure in which voids are three-dimensionally continuous, and it is preferable to contain flat voids that extend especially in the machine direction and the transverse direction of the separator.

Although the method for forming through holes in the film may be either of wet methods or dry methods, dry methods are desirable because the process can be simplified. In particular, it is preferable to use the β-crystal method from the standpoint that the film is biaxially oriented; physical properties are uniformized; and high strength can be maintained despite a thin film.

To achieve excellent battery properties, the porous resin film constituting the air-permeable film of the present invention is preferably composed of a polypropylene resin and preferably is a porous film produced especially by the β-crystal method.

To form through holes in the film by using the β-crystal method, it is important to form a large amount of β-crystals in a polypropylene resin. For achieving this, it is preferable to use as an additive a crystal nucleating agent called a β-crystal nucleating agent which selectively forms β-crystals when added into a polypropylene resin. As a β-crystal nucleating agent, various pigment compounds and amide compounds can be preferably used. Examples thereof include amide compounds; tetraoxaspiro compounds; quinacridones; iron oxides of nanoscale size; alkali metal salts or alkaline earth metal salts of carboxylic acids typified, for example, by potassium 1,2-hydroxystearate, magnesium benzoate, magnesium succinate, or magnesium phthalate; aromatic sulfonic acid compounds typified, for example, by sodium benzenesulfonate or sodium naphthalenesulfonate; diesters or triesters of di- or tri-basic carboxylic acids; phthalocyanine pigments typified, for example, by phthalocyanine blue; binary compounds composed of an organic dibasic acid and an oxide, a hydroxide, or a salt of a metal of IIA group of the periodic table; and compositions composed of a cyclic phosphorus compound and a magnesium compound. The content of the β-crystal nucleating agent is preferably 0.05 to 0.5 parts by mass, and more preferably 0.1 to 0.3 parts by mass, based on 100 parts by mass total polypropylene resin.

The polypropylene resin contained in the porous film of the present invention preferably comprises as a main component an isotactic polypropylene resin having a melt flow rate (hereinafter referred to as MFR) in the range of 2 to 30 g/10 min. When the MFR is outside the above-described preferred range, it can be difficult to obtain a biaxially stretched film. More preferably, the MFR is 3 to 20 g/10 min. Here, MFR is an index defined by JIS K 7210 (1995) showing the melt viscosity of a resin, and it is widely used as a physical property value which characterizes a polyolefin resin. In the case of a polypropylene resin, measurements are made at Condition M of JIS K 7210, that is, at a temperature of 230°C and a load of 2.16 kg.

The isotactic index of the isotactic polypropylene resin is preferably 90 to 99.9%. When the isotactic index is not less than 90%, the crystallinity of the resin is sufficiently high, and high strength and workability of the porous film can be achieved. As the isotactic polypropylene resin, a commercially available resin can be used.

For the porous film of the present invention, needless to say, a homopolypropylene resin can be used, and, from the standpoint of the stability and film-forming properties during the film forming process and the uniformity of physical properties, a resin obtained by copolymerizing polypropylene with ethylene components or α-olefin components such as butene, hexene, and octene in the range of up to 5.0% by mass may be used. The introduction form of comonomers into polypropylene may be either random copolymerization or block copolymerization.

In addition, to improve the film-forming properties, the above-described polypropylene resin preferably contains a high melt strength polypropylene in the range of 0.5 to 5.0% by mass. High melt strength polypropylene refers to a polypropylene resin whose tensile strength in the molten state has been increased by adding high-molecular-weight components or components having branched structure to the polypropylene resin or copolymerizing polypropylene with long-chain branched components. In particular, it is preferable to use a polypropylene resin obtained by copolymerization with long-chain branched components. Such a high melt strength polypropylene is commercially available, and, for example, polypropylene resins PF814, PF633, and PF611 available from Basell; a polypropylene resin WB130HMS available from Borealis; and polypropylene resins D114 and D206 available from Dow Chemical Company can be used.

The polypropylene resin contained in the porous film of the present invention is preferably a mixture of 80 to 99.1 % by mass of polypropylene and 20 to 0.1 % by mass of ethylene/$\alpha$-olefin copolymers because the void formation efficiency during stretching is improved, and the increased pore size improves air permeability. From the standpoint of achieving high air permeability and high porosity, the amount of ethylene/$\alpha$-olefin copolymers is more preferably 0.5 to 10% by mass, and still more preferably 0.8 to 5.0% by mass. Examples of ethylene/$\alpha$-olefin copolymers include linear low-density polyethylene and ultra low-density polyethylene. Above all, metallocene-catalyzed ethylene/$\alpha$-olefm copolymers are preferred, and, in particular, ethylene/octene-1 copolymers obtained by copolymerization with octene-1 can preferably be used. Examples of such ethylene/octene-1 copolymers include a commercially available resin, for example, "Engage" (registered trademark) (type: 8411, 8452, 8100, and the like) available from Dow Chemical Company.

In the porous film of the present invention, pores are preferably formed by the $\beta$-crystal method, and therefore the $\beta$-crystal formability of the polypropylene resin contained in the film is preferably 50 to 90%. When the $\beta$-crystal formability is not less than 50%, the amount of $\beta$-crystals is sufficient during film-forming, and the number of voids formed in the film is increased by utilizing the transition to $\alpha$-crystals; consequently, the film with high permeability can be obtained. When the $\beta$-crystal formability is not more than 90%, large pores are not readily formed, allowing the application as a separator for an electric storage device. To achieve the $\beta$-crystal formability in the range of 50 to 90%, not to mention the use of a polypropylene resin having a high isotactic index, it is preferable to add the above-mentioned $\beta$-crystal nucleating agent. The $\beta$-crystal formability is more preferably 60 to 80%. Any preferred lower limit value can be combined with any preferred upper limit value.

It is important for the porous film of the present invention to have a absorbing height of an electrolysis solution of 10 to 60 mm in at least one direction of the film's machine direction or transverse direction, wherein the absorbing height being measured after 30 minutes from the start of the absorption of the electrolysis solution. In cases where the absorbing height of an electrolysis solution after 30 minutes is less than 10 mm, the battery workability is reduced, and besides, when the porous film of the present invention is used as a separator, the output characteristics can be reduced because the electrolysis solution does not permeate sufficiently and/or uniformly into the separator; the initial discharge capacity can be reduced; or the cycle characteristics can be reduced. From the standpoint of battery workability, the absorbing height of an electrolysis solution after 30 minutes is more preferably 12 to 60 mm, and still more preferably 15 to 60 mm. Any preferred lower limit value can be combined with any preferred upper limit value. The absorbing height of an electrolysis solution can be controlled, for example, by the porosity and average pore size of the porous films to be obtained; it is heightened by increasing the porosity within the range of 60 to 90% and lowered by decreasing the porosity. The absorbing height of an electrolysis solution after 30 minutes can be determined, as shown in Figure 1, by dipping a sample end in a mixed solvent and measuring the height of the sucked mixed solvent from the liquid surface after 30 minutes have elapsed. From the absorbing height of an electrolysis solution after 30 minutes, uniform absorption properties into a separator can be evaluated.

The porous film of the present invention preferably has a absorbing height of an electrolysis solution of 3 to 60 mm in at least one direction of the film's machine direction or transverse direction, wherein the absorbing height being measured after 1 minute from the start of the absorption of the electrolysis solution. When the absorbing height of an electrolysis solution after 1 minute is not less than 3 mm, permeation time of the electrolysis solution after injection is short enough, which allows shortening the aging time after injecting the electrolysis solution, which is a cause of reducing the productivity in a battery assembly process, whereby the productivity can be improved. From the standpoint of battery workability, the absorbing height of an electrolysis solution after 1 minute is more preferably 5 to 60 mm, and especially preferably 10 to 60 mm. The absorbing height of an electrolysis solution can be controlled, for example, by the porosity and average pore size of the porous films to be obtained. The absorbing height of an electrolysis solution is heightened by increasing the porosity within the range of 60 to 90%, and the absorbing height of an electrolysis solution is lowered by decreasing the porosity. The absorbing height of an electrolysis solution after 1 minute can be determined, as shown in Figure 1, by dipping the end of a sample in a mixed solvent and measuring the height of the sucked mixed solvent from the liquid surface after 1 minute have elapsed. From the absorbing height of an electrolysis solution after 1 minute, the permeability into a separator immediately after injecting an electrolysis solution can be evaluated.

It is important that the tensile strength at break in the machine direction of the porous film of the present invention be not less than 65 MPa. When it is less than 65 MPa, the film can stretch, cause wrinkles, or break in the process of processing into an electric storage device using a separator, and the handleability can be deteriorated. From the standpoint of workability during battery winding, the tensile strength at break in the machine direction is preferably not less than 70 MPa, and more preferably not less than 75 MPa. In the present invention, the higher the tensile strength at break in the machine direction is, the more excellent the above-described handleability tends to be. However, when it is too high, the film can excessively shrink in the transverse direction or can have poor permeation performance in the process of processing into an electric storage device, and therefore it is preferably not more than 150 MPa, for example. The tensile strength at break in the machine direction can be controlled, for example, by the crystallinity of polypropylene, the porosity of the porous films to be obtained, and the orientation state (the orientation state in the plane of the film). By decreasing the porosity within the range of 50 to 90%, the tensile strength at break in the machine direction is enhanced, and by increasing the porosity, the tensile strength at break in the machine direction is weakened. It is important to control the orientation state because, even at the same porosity, the higher the plane orientation becomes, the higher the tensile strength at break in the machine direction can be. The plane orientation of the porous film can be higher under stretching conditions of a higher magnification or a lower temperature, for example, when the film is produced by stretching in at least one direction in the film-forming process. In particular, when producing the film by using the longitudinal-transverse sequential biaxial stretching method, the longitudinal stretching magnification as high as preferably 4- to 7-fold is effective for enhancing the tensile strength at break in the machine direction.

In general, there is a trade-off between absorption properties and tensile strength at break in the machine direction, and therefore the present invention is devised as follows.

Examples of methods for simultaneously achieving absorption properties and tensile strength at break in the machine direction include, for example, laminating a layer having excellent absorption properties (a absorption layer) with a layer having excellent tensile strength at break in the machine direction as a separator in a lithium ion battery (a strength retaining layer) and introducing carboxyl groups into the surface of a layer having excellent tensile strength at break in the machine direction as a separator in a lithium ion battery (a strength retaining layer).

As a method for simultaneously achieving absorption properties and tensile strength at break in the machine direction, laminating a layer having excellent absorption properties (a absorption layer) with a layer having excellent tensile strength at break in the machine direction (a strength retaining layer) is important, and further, it is important to use the absorption layer as a surface layer from the standpoint of improving absorption properties. In particular, the laminated structure such as absorption layer/strength retaining layer/absorption layer is preferred from the standpoint of improving cycle characteristics as well as improving absorption properties. For the properties of a absorption layer, it is preferred that the absorbing height of an electrolysis solution in at least one direction of the film's machine direction or transverse direction after 30 minutes from the start of the absorption of the electrolysis solution be 15 to 60 mm; the porosity be 70 to 90%; and the resistance of air permeability be 10 to 300 sec/100 ml. For the properties of a strength retaining layer, it is preferred that the tensile strength at break in the machine direction be 75 to 150 MPa.

The lamination thickness ratio in the case where the laminated constitution is absorption layer/strength retaining layer/absorption layer is preferably in the range of 1/2/1 to 1/10/1 from the standpoint of improving cycle characteristics, and more preferably in the range of 1/2/1 to 1/5/1 from the standpoint of reducing resistance of air permeability and improving output characteristics. Any preferred lower limit value can be combined with any preferred upper limit value.

The thickness of the porous film of the present invention is preferably 15 to 40 $\mu$m. When the thickness is not less than 15 $\mu$m, the growth of dendrites from a negative electrode can be inhibited, whereby the long-term stability and the safety are sufficient, and besides a short circuit between a positive electrode and a negative electrode will not occur during assembling and in use as a battery. When the thickness is not more than 40 $\mu$m, the separator resistance will not be too high, whereby sufficient output characteristics are ensured, and besides a positive electrode active material and a negative electrode active material can be filled into a battery sufficiently, whereby the decrease in energy density can be suppressed.

In the porous film of the present invention, it is important for the absorption layer to have a absorbing height of an electrolysis solution of 15 to 60 mm in at least one direction of the film's machine direction or transverse direction, wherein the absorbing height being measured after 30 minutes from the start of the absorption of the electrolysis solution. The absorbing height of an electrolysis solution in the transverse direction after 30 minutes is preferably not less than 20 mm from the standpoint of battery workability. In a battery assembly process, an injection process takes a long period of time including aging time, and therefore absorption properties have been demanded to be improved. In the injection process, when the injection of an electrolysis solution is carried out, the electrolysis solution is at first not completely sucked into the electrode and separator and collects at the bottom of an outer can. The electrolysis solution is gradually sucked up by the surface tension of the electrode and separator and finally sucked completely. The absorption layer in the present invention sucks an electrolysis solution three-dimensionally, that is, not only by the surface tension of the separator but also from the end face of the separator, whereby absorbing the solution quickly. On the other hand, conventional porous films suck a solution not three-dimensionally and only by the surface tension of the separator, and therefore it takes a long period of time. For obtaining the above-described effect of the absorption layer in the present invention, it is preferable to have a structure in which voids are three-dimensionally continuous. The above-described structure is readily formed by increasing the porosity and average pore size. Specifically, by increasing the β-crystal formability of the film constituting the absorption layer within the range of 70 to 90% or increasing the content of ultra low-density polyethylene within the range of 0.1 to 10% by mass, preferably 3.0 to 7.0% by mass, the average pore size as well as the porosity is increased.

The strength retaining layer in the porous film of the present invention preferably has a tensile strength at break in the machine direction of not less than 70 MPa, and more preferably not less than 85 MPa. Higher tensile strength at break can be achieved by reducing the average pore size and increasing the resistance of air permeability. However, care should be taken because reducing the pore size and increasing the resistance of air permeability increase the separator resistance, resulting in some cases in insufficient battery properties and reduced absorption properties. The tensile strength at break in the machine direction in the above-described range is achievable by decreasing the β-crystal formability of the film constituting the strength retaining layer by between 50% and 70%; increasing the content of high melt strength polypropylene within the range of 0 to 10% by mass, preferably 0 to 2.0% by mass; and decreasing the content of ultra low-density polyethylene within the range of 0 to 3.0%.

Examples of methods of introducing carboxyl groups into the surface of a layer having excellent tensile strength at break in the machine direction in order to simultaneously achieve absorption properties and tensile strength at break in the machine direction include, for example, laminating porous resin films containing a polypropylene resin having a modified terminal carboxyl group and corona-treating a porous resin film containing a polypropylene resin having a β-crystal fraction of 50% or more under a carbonic acid gas atmosphere. Laminating porous resin films containing a polypropylene resin having a modified terminal carboxyl group is preferred because carboxyl groups will exist stably for a long period of time. Examples of methods of introducing a terminal carboxyl group into a polypropylene resin include, for example, graft copolymerizing polar monomers having a carboxyl group(s). Examples of polar monomers having a carboxyl group(s) include (meth)acrylic acid and acid derivatives thereof, and monoolefinic dicarboxylic acids and anhydrides thereof and monoesters thereof. Specific examples of (meth)acrylic acid and ester derivatives thereof include, for example, (meth)acrylic acid; methyl (meth)acrylate, ethyl (meth)acrylate, n-propyl (meth)acrylate, isopropyl (meth) acrylate, n-butyl (meth)acrylate, isobutyl (meth)acrylate, t-butyl (meth)acrylate, and the like. Examples of monoolefinic dicarboxylic acids include, for example, maleic acid, chloromaleic acid, citraconic acid, itaconic acid, glutaconic acid, 3-methyl-2-pentenedioic acid, 2-methyl-2-pentenedioic acid, 2-hexenedioic acid, and the like.

The porous film of the present invention, for being suitably used in the application of a separator in an electric storage device, preferably has a ratio of the absorbing height in the film's transverse direction to the absorbing height in the machine direction (the transverse direction/the machine direction) of 0.7 to 1.3, wherein the absorbing height being measured after 30 minutes from the start of the absorption of the electrolysis solution, from the standpoint that the electrolysis solution can be sucked in a balanced manner; the internal resistance of a battery can be reduced; and further the power density is improved. This ratio is more preferably 0.8 to 1.2 from the standpoint of absorption properties. Any preferred lower limit value can be combined with any preferred upper limit value.

The porous film of the present invention, for being suitably used in the application of a separator in an electric storage device, preferably has a resistance of air permeability in the range of 10 to 400 sec/100 ml from the standpoint of reducing the internal resistance of a battery and further improving the power density. When the resistance of air permeability is not less than 10 sec/100 ml, the porosity will not be too high, or the pore size will not be too large, whereby the strength can be maintained sufficiently; besides the long-term stability and safety of a battery can be ensured when the film is used as a separator. On the other hand, when the resistance of air permeability is not more than 400 spec/100 ml, the output characteristics is sufficient when the film is used as a separator. The resistance of air permeability is more preferably 10 to 300 sec/100 ml, and still more preferably 10 to 200 sec/100 ml, from the standpoint of providing excellent separator properties. Any preferred lower limit value can be combined with any preferred upper limit value. Resistance of air permeability herein refers to an index of the air permeability of a sheet, which is shown in JIS P 8117 (1998).

The resistance of air permeability can be controlled, for example, by stretching conditions in the stretching process (stretching direction (longitudinal or transverse), stretching mode (longitudinal or transverse uniaxial stretching, longitudinal-transverse or transverse-longitudinal sequential biaxial stretching, simultaneous biaxial stretching, re-stretching after biaxial stretching, and the like), stretching magnification, stretching rate, stretching temperature, and the like). The resistance of air permeability is lower in the case of biaxial stretching than in the case of uniaxial stretching. Increasing the stretching magnification decreases the resistance of air permeability, and decreasing the stretching magnification increases the resistance of air permeability.

The porous film of the present invention preferably has a porosity of 50 to 90%. When the resistance of air permeability is 10 to 300 sec/100 ml, the porosity is more preferably 50 to 80% from the standpoint of providing excellent separator properties. When the porosity is not less than 50%, the output characteristics is sufficient when the film is used as a separator; when not more than 90%, the long-term stability and safety of a battery can be ensured, and the strength is sufficient. For the porosity, by increasing the β-crystal formability within the range of 50 to 90% and increasing the content of ultra low-density polyethylene within the range of 0 to 7.0%, the porosity as well as the air permeability is increased, and reducing the content decreases the porosity in some cases.

The example of the method for producing the porous film of the present invention will now be described specifically.

First, as a polypropylene resin constituting the porous film, a material A, which is prepared by adding 0.2 to 0.3 parts by mass of N,N'-dicyclohexyl-2,6-naphthalene dicarboxyamide to 92 parts by mass of a homopolypropylene resin having an MFR of 8 g/10 min that is commercially available, 1 part by mass of a high melt strength polypropylene resin having an MFR of 2.5 g/10 min that is also commercially available, and 7 parts by mass of a polyethylene resin having an MFR of 8 g/10 min that is also commercially available and mixing the resultant in advance at a predetermined ratio using a twin-screw extruder, and a material B, which is prepared by adding 0.1 parts by mass of N,N'-dicyclohexyl-2,6-naphthalene dicarboxyamide to 99 parts by mass of a homopolypropylene resin having an MFR of 8 g/10 min that is commercially available and 1 part by mass of a high melt strength polypropylene resin having an MFR of 2.5 g/10 min that is also commercially available and mixing the resultant in advance at a predetermined ratio using a twin-screw extruder, are provided.

Next, the material A alone or a dry blend of 80 to 90 parts by mass of the material A and 10 to 20 parts by mass of a maleic anhydride-modified polypropylene resin is fed into a single-screw extruder for an A-layer; the material B is fed into a single-screw extruder for a B-layer, and melt extrusion is carried out at 200 to 230°C. Then, foreign matter, modified polymers, and the like are removed by a filter that is placed midway of a polymer tube, and then the resultant is discharged from a multi-manifold type A/B/A composite T-die onto a casting drum to obtain a laminated non-stretched sheet having a layer constitution of A-layer/B-layer/A-layer. At this time, the surface temperature of the casting drum is preferably 105 to 130°C, and more preferably 115 to 125°C, from the standpoint of controlling the β-crystal fraction of the cast film high. Since the forming, especially of a sheet edge later affects the stretchability, it is preferable at this time to blow spot air onto the edge to be brought into close contact with the drum. Further, based on the state of how the whole sheet is in close contact with the drum, air may be blown onto the whole surface as required using an air knife.

Next, the laminated non-oriented sheet obtained is biaxially oriented to form voids in the film. As a method of biaxial orientation, the sequential biaxial stretching method in which stretching is performed in the width direction following the stretching in the film machine direction or in which stretching is performed in the machine direction following the stretching in the width direction, or the simultaneous biaxial stretching method in which stretching is performed approximately simultaneously in the film's machine direction and width direction can be used, but the sequential biaxial stretching method is preferably employed because a highly air-permeable film is easily obtained. In particular, it is preferred that stretching be performed in the width direction following the stretching in the machine direction.

For specific stretching conditions, the laminated non-oriented sheet is first controlled at a temperature for stretching in the machine direction. As a method for controlling the temperature, the method using a temperature-controlled rotating roller, the method using a hot-air oven, and the like can be employed. As a stretching temperature in the machine direction, it is preferable to employ a temperature of 90 to 135°C, and more preferably 100 to 120°C. Any preferred lower limit value can be combined with any preferred upper limit value. The stretching magnification is 3- to 10-fold, more preferably 4- to 7-fold, and still more preferably 4.5- to 6-fold. Any preferred lower limit value can be combined with any preferred upper limit value.

After stretching in the machine direction, the film is introduced into a stenter-type stretching machine with the ends gripped. Then, preferably, the film is heated to 130 to 155°C and stretched in the transverse direction 3- to 12-fold, and more preferably, the film is heated to 142 to 155°C and stretched in the transverse direction 5- to 10-fold. Any preferred lower limit value can be combined with any preferred upper limit value. The transverse stretching rate at this time is preferably 100 to 5,000%/min, and more preferably 1,000 to 4,000%/min. Any preferred lower limit value can be combined with any preferred upper limit value. Then, heat-set is performed continuously in the stenter, and the temperature is preferably not less than the transverse stretching temperature and not more than 163°C.

Further, the heat-set may be performed while relaxing the film in the film's machine direction and/or width direction, and the relaxation rate especially in the width direction is preferably 7.0 to 12% from the standpoint of thermal dimension stability.

The porous film obtained may be corona treated under a mixed gas atmosphere of 50% of carbonic acid gas and 50% of nitrogen gas.

The porous film of the present invention is capable of retaining an organic solvent and therefore can be used as a separator in an electric storage device that uses an organic solvent as an electrolysis solution. In addition, the porous film of the present invention has a low resistance as a separator because of having high air permeability and therefore can be preferably used in a lithium ion battery and a lithium ion capacitor among the above-described electric storage devices.

Examples of the electric storage device of the present invention include, for example, a nonaqueous electrolysis solution secondary battery and an electric double layer capacitor that use an organic solvent. In particular, a lithium ion battery is suitable because of the balance between the battery capacity and the power density. The electric storage device of the present invention can be used repeatedly by charging and discharging it and therefore can be used as a power source, for example, for IT equipment, home-use equipment, hybrid vehicles, and electric vehicles. Especially for the above-described uses, a lithium ion battery is suitable because of the balance between the battery capacity and the power density. The electric storage device using the porous film of the present invention has high porosity and high air permeability and therefore can be suitably used as a power source, for example, for hybrid vehicles and electric vehicles.

EXAMPLES

The present invention will now be described in detail by way of examples. The properties were measured and evaluated by the following method.

(A) Tensile strength at break in the machine direction

In accordance with JIS K 7127 (1999, test piece type 2), the tensile strength at break was measured at 25°C and 65% RH by using a film strength and elongation measuring apparatus (AMF/RTA-100) manufactured by ORIENTEC Co., LTD. Specifically, for a porous film, a sample was cut to a size of 15 cm in the machine direction and 1 cm in the transverse direction and elongated with an original length of 50 mm at a tensile speed of 300 mm/min to measure the tensile strength at break (unit: MPa). The same measurement was made five times for the same sample, and the mean value of the tensile strength at break obtained was taken as the strength in the machine direction of the sample. For each layer, the film was cleaved according to the lamination ratio described in Examples and Comparative Examples to obtain each layer alone, and then the same measurement as for the porous film was made. For the lamination ratio of the porous film, the film is cut in the thickness direction using a razor blade; the surface of the section is observed under $\times$ 10,000 using a field-emission scanning electron microscope, JSM-6700F, manufactured by JEOL Ltd; and the thickness of each layer is measured using "Measurement of the distance between two points" in the software, JEOL PC-SEM 6700. The same measurement was made five times for the same sample at different points, and the mean value of the thickness obtained was taken as the thickness of the layer, which was used to calculate the lamination ratio. The measurement conditions are as shown below.
Accelerating voltage: 1 kV
Objective aperture: 4
Secondary electron detection key: ON
Mode: 2
Emission: 10 $\mu$m
Auto-reset: OFF
Observation mode: LEM
Scan rotation: 0
Dynamic focus: 0

The cleavage was carried out by applying 20 cm length of "Cellophane tape", 1.5 cm wide CT-15, produced by NICHIBAN CO., LTD. to the layer different from the layer that is subjected to the above-described measurement and peeling off the layer different from the layer that is subjected to the measurement while measuring the film thickness.
The thickness of the film was measured as follows. In accordance with JIS K 7130 (1992) A-2 method, the film thickness was measured by using a dial gauge at five arbitrary points with 10 films laminated. The mean value of the values of the five points was divided by 10 to calculate the film thickness per film, which value was taken as the film thickness.
With respect to the machine direction, for film rollers and wound-type batteries, the longer direction was taken as the machine direction, and for sheet products, stacked-type batteries, and the like, the machine direction and the transverse direction of which are not clear, the direction of higher tensile strength at break determined by measuring each direction by the above-described measurement was taken as the machine direction.

(B) Absorbing height of electrolysis solution after 30 minutes

A mixed solvent of ethylene carbonate:dimethyl carbonate = 3:7 (mass ratio) in an amount of 100 ml was placed into a container. For the measurement of the absorbing height of an electrolysis solution in the transverse direction, cutting was performed to a size of 10 mm in the machine direction and 60 mm in the transverse direction. As shown in Figure 1, the end face in a machine direction 2 of a porous film 1 as a sample was dipped into a mixed solvent 3, a height (absorbing height) 5 of the mixed solvent sucked by capillary action from the liquid surface was measured after 30 minutes have elapsed. For evaluation, measurements were made ten times for one sample, and the mean value was taken as the absorbing height of an electrolysis solution.

For each layer, the film was cleaved according to the lamination ratio described in Examples and Comparative Examples to obtain each layer alone, and then the same measurement as for the porous film was made.

For the measurement of the absorbing height of an electrolysis solution in the machine direction, cutting was performed to a size of 10 mm in the transverse direction and 60 mm in the machine direction. The measurement was made in the same manner as described above except that the end face in a transverse direction 2 of the sample was dipped into the mixed solvent 3 as shown in Figure 1.

(C) Absorbing height of electrolysis solution after 1 minute

A mixed solvent of ethylene carbonate:dimethyl carbonate = 3:7 (mass ratio) in an amount of 100 ml was placed into a container. For the measurement of the absorbing height of an electrolysis solution in the transverse direction, cutting was performed to a size of 10 mm in the machine direction and 60 mm in the transverse direction. As shown in Figure 1, the end face in the machine direction 2 of the porous film 1 as a sample was dipped into the mixed solvent 3, the height (absorbing height) 5 of the mixed solvent sucked by capillary action from the liquid surface was measured after 1 minute has elapsed. For evaluation, measurements were made ten times for one sample, and the mean value was taken as the absorbing height of an electrolysis solution. For each layer, the film was cleaved according to the lamination ratio described in Examples and Comparative Examples to obtain each layer alone, and then the same measurement as for the porous film was made.

For the measurement of the absorbing height of an electrolysis solution in the machine direction, cutting was performed to a size of 10 mm in the transverse direction and 60 mm in the machine direction. The measurement was made in the same manner as described above except that the end face in a transverse direction 2 of the sample was dipped into the mixed solvent 3 as shown in Figure 1.

(D) Resistance of air permeability (Gurley permeability)

In accordance with the B method of JIS P 8117 (1998), measurements were made at 23°C and 65% RH (unit: sec/100 ml). For the same sample, the same measurement was made at five different points, and the mean value of the Gurley permeability obtained was taken as the resistance of air permeability of the sample. At this time, those having the mean value of the Gurley permeability of more than 7,200 sec/100 ml was considered to have substantially no resistance of air permeability, and evaluated as infinite ($\infty$) sec/100 ml.

(E) Porosity

A sample film was cut into a square of $3 \times 3$ cm, and the mass W (g) was measured using an electronic balance (electronic even balance, UW220H, manufactured by Shimadzu Corporation). A flat-type gauge head of 5 mm $\varphi$ was attached to a dial gauge-type thickness meter (JIS B 7503 (1997), UPRIGHT DIAL GAUGE (No.25) manufactured by PEACOCK), and 125 g load was applied thereto to measure the thickness at five points, the average thickness of which was taken as D (cm). The porosity was determined by the following equation.
$$\text{Porosity} = 100 - (100 \ (W / \rho) / (9 \times D))$$

$\rho$ in the above equation represents the specific gravity of the film before stretching. For the film before stretching, three areas were cut out from arbitrary places on the sample film, heat-pressed at 280°C and 5 MPa, and then rapidly cooled with water at 25°C to produce a sheet with pores completely eliminated. The specific gravity $\rho$ of this sheet was measured in accordance with the D method of JIS K 7112 (1999) at 23 $\pm$ 1°C using ethanol/water (2/1) as a solvent in the gradient tube. (F) $\beta$-crystal formability

As a sample, a resin or a film in an amount of 5 mg was collected in an aluminum pan and measured by using a differential scanning calorimeter (DSC) (RDC220 manufactured by Seiko Instrument Inc.). First, the temperature is raised from 20°C to 250°C at 20°C/min under a nitrogen atmosphere and held there for 5 minutes. Next, the temperature is lowered to 25°C at 20°C/min and held there for 5 minutes. Then, the temperature was raised again to 250°C at 20°C/min to make a measurement. For the $\beta$-crystal melting peaks of polypropylene in the temperature range of 145 to 157°C observed in the second temperature rising and the $\alpha$-crystal melting peaks of polypropylene observed at 158°C or above, the heat of fusion of each crystal was calculated from the area of the region enclosed by the baseline drawn on the basis of the flat portion in the high temperature side and the peaks. The calibration of the heat of fusion is performed using indium.

The β-crystal formability is calculated from the heat of fusion of β-crystals (ΔHβ) and the heat of fusion of α-crystals (ΔHα) by the following equation.

$$\text{β-crystal formability (\%)} = [\Delta H\beta / (\Delta H\alpha + \Delta H\beta)] \times 100$$

(G) Workability of battery

Using a lithium ion battery automatic winder manufactured by KAIDO MFG. CO., LTD., the porous film of the present invention, aluminum foil with a thickness of 100 μm, and copper foil with a thickness of 100 μm were wound by 1 m in such a laminated fashion that they were in the order of the film/copper foil/the film/aluminum foil. The number of tests was 100.

Those having an ill-shaped winding because of the occurrence of stretching, wrinkling, breaking, or winding slippage of the film due to the low rigidity of the film were evaluated as NG.

> A: 0 NG
> B: 1 to 2 NG
> C: 3 or more NG

(H) Battery properties

[1] Output characteristics

A lithium cobalt oxide (LiCoO$_2$ positive electrode with a thickness of 40 μm produced by Hohsen Corp. was die cut into a circle with a diameter of 15.9 mm, and a graphite negative electrode with a thickness of 50 μm produced by Hohsen Corp. was die cut into a circle with a diameter of 16.2 mm, after which each film for a separator of Examples/Comparative Examples was die cut to a diameter of 24.0 mm. From the bottom, the negative electrode, the separator, and the positive electrode were superimposed in the order mentioned such that the positive electrode active material-side and the negative electrode active material-side faced each other, and placed in a stainless steel small container with a lid.

The container and the lid are insulated; the container is in contact with the copper foil of the negative electrode, and the lid is in contact with the aluminum foil of the positive electrode. Into this container, the electrolysis solution obtained by using as an organic solvent a mixture of ethylene carbonate and dimethyl carbonate at a mass ratio of 3:7 and dissolving therein 1.0 mol/L of LiPF$_6$ as indicator salts was injected. The container was hermetically sealed, and aging was carried out for 30 minutes after the injection of the electrolysis solution to produce a battery for each of Examples/Comparative Examples.

For each of the secondary batteries produced, the charge/discharge operation of charging at 3 mA to 4.2 V for 1.5 hours and discharging at 3 mA to 2.7 V was performed under an atmosphere at 25°C to examine the discharge capacity. Further, the charge/discharge operation of charging at 3 mA to 4.2 V for 1.5 hours and discharging at 30 mA to 2.7 V was performed, and the values obtained by the equation: [(Discharge capacity at 30 mA) / (Discharge capacity at 3 mA)] × 100 were evaluated according to the criteria below. The number of tests was 20, and evaluation was performed using the mean value thereof.

> A: 85% or more
> B: Not less than 80% and less than 85%
> C: Not less than 75% and less than 80%
> D: Less than 75%

[2] Capacity properties

As a positive electrode, a positive electrode of lithium cobalt oxide (LiCoO$_2$) produced by Hohsen Corp. with a thickness of 40 μm was used, and it was produced by die-cutting into a square with sides of 100 mm.

As a negative electrode, a graphite negative electrode produced by Hohsen Corp. with a thickness of 50 μm

was used, and it was produced by die-cutting into a square with sides of 105 mm.

For an electrolysis solution, a mixture of ethylene carbonate and dimethyl carbonate at a mass ratio of 3:7 was used as an organic solvent, and 1.0 mol/L of $LiPF_6$ as indicator salts was dissolved therein for use.

A separator was produced by die-cutting into a square with sides of 110 mm so that it had a wider area than that of both the positive electrode and the negative electrode. As a separator, the porous polypropylene film of each of Examples/Comparative Examples was used.

The positive electrode and the negative electrode were arranged such that the active material layers of the positive electrode and the negative electrode faced each other, and the separator was inserted therebetween. Further, a laminate film was arranged on the outer part and sealed on three sides. With the tip of each tab drawn outside a laminate cell, the laminate cell was raised with the opening side up and filled with the electrolysis solution, and then vacuum degassed. Immediately after the degassing, the laminate cell was hermetically sealed, and aging was carried out for 30 minutes after the hermetical sealing to assemble a monolayer laminated lithium ion secondary battery.

For each of the secondary batteries immediately after the aging for 30 minutes, the charge/discharge operation of charging at 150 mA to 4.3 V for 2 hours and discharging at 150 mA to 2.7 V was performed under an atmosphere at 25°C to examine the charge capacity and discharge capacity.

The values obtained by the equation: [(Discharge capacity) / (Charge capacity)] × 100 were evaluated according to the following criteria. The number of tests was 20, and evaluation was performed using the mean value thereof. However, when at least one battery had a value of less than 20%, it was evaluated as D regardless of the mean value.

A: 90% or more
B: Not less than 80% and less than 90%
C: Not less than 75% and less than 80%
D: Less than 75%

[3] Cycle characteristics

The secondary battery produced in the same manner as in the above-described capacity measurements was aged for 30 minutes, and the charge/discharge operation of charging at 150 mA to 4.3 V for 2 hours and discharging at 150 mA to 2.7 V was performed under an atmosphere at 25°C to examine the discharge capacity. Further, the same charge/discharge operation was performed 100 times, and the discharge capacity at the 100th time was examined.

The values obtained by the equation: [(Discharge capacity at the 100th time) / (Discharge capacity at the 1st time)] × 100 were evaluated according to the criteria below. The number of tests was 20, and evaluation was performed using the mean value thereof. However, when at least one battery had a value of less than 20%, it was evaluated as C regardless of the mean value.

A: 80% or more
B: Not less than 75% and less than 80%
C: Less than 75%

[4] Permeability of electrolysis solution

As a positive electrode, a positive electrode of lithium cobalt oxide ($LiCoO_2$) produced by Hohsen Corp. with a thickness of 40 $\mu$m was used, and it was produced by die-cutting into a square with sides of 100 mm.

As a negative electrode, a graphite negative electrode produced by Hohsen Corp. with a thickness of 50 $\mu$m was used, and it was produced by die-cutting into a square with sides of 105 mm.

For an electrolysis solution, a mixture of ethylene carbonate and dimethyl carbonate at a mass ratio of 3:7 was used as an organic solvent, and 1.0 mol/L of $LiPF_6$ as indicator salts was dissolved therein for use.

A separator was produced by die-cutting into a square with sides of 110 mm so that it had a wider area than that of both the positive electrode and the negative electrode. As a separator, the porous polypropylene film of each of Examples/Comparative Examples was used.

The positive electrode and the negative electrode were arranged such that the active material layers of the positive electrode and the negative electrode faced each other, and the separator was inserted therebetween. Further, a laminate film was arranged on the outer part and sealed on three sides. With the tip of each tab drawn outside a laminate cell, the laminate cell was raised with the opening side up and filled with the electrolysis solution, and then vacuum degassed. Immediately after the degassing, the laminate cell was hermetically sealed, and aging was carried out for 1 minute after the hermetical sealing to assemble a monolayer laminated lithium ion secondary battery.

Each of the secondary batteries immediately after the aging for 1 minute was disassembled, and the separator alone was taken out. Photographs were taken of the entire separator taken out, and the image data obtained was analyzed using Image-Pro Plus Ver. 4.5 available from Planetron, Inc. The percentage of the area of black portions (electrolysis solution-permeated portions) relative to the whole area of the image obtained was calculated. The measurements were made at 10 points for the same porous film, and the mean value thereof was taken as the area percentage of electrolysis solution permeation of the sample.

A: 90% or more
B: Not less than 80% and less than 90%
C: Not less than 60% and less than 80%
D: Less than 60%

The present invention will now be described more specifically by way of examples.

(Example 1)

First, the composition below was compounded at 300°C using a twin-screw extruder to prepare a chip of resins A and B.

<Polypropylene resin A>

Ninety-two parts by mass of a homopolypropylene FLX80E4 available from Sumitomo Chemical Co., Ltd. (hereinafter referred to as PP-1); 1 part by mass of a polypropylene PF-814 (hereinafter referred to as HMS-PP), which is a high melt strength polypropylene resin, available from Basell; and 7 parts by mass of "Engage" (registered trademark) 8411 (melt index: 18 g/10 min; hereinafter referred to as PE), which is an ethylene-octene-1 copolymer, available from Dow Chemical Company; in addition thereto, 0.2 parts by mass of N,N'-dicyclohexyl-2,6-naphthalene dicarboxyamide (Nu-100 available from New Japan Chemical Co., Ltd.) as a β-crystal nucleating agent, and further 0.15 parts by mass and 0.1 parts by mass of "IRGANOX" (registered trademark) 1010 and "IRGAFOS" (registered trademark) 168, respectively, available from Ciba Specialty Chemicals K. K. as an antioxidant.

<Polypropylene resin B>

Ninety-nine parts by mass of a homopolypropylene PP-1; 1 part by mass of a high melt strength polypropylene HMS-PP; 0.2 parts by mass of N,N'-dicyclohexyl-2,6-naphthalene dicarboxyamide (Nu-100 available from New Japan Chemical Co., Ltd.) as a β-crystal nucleating agent; and further 0.15 parts by mass and 0.1 parts by mass of "IRGANOX" (registered trademark) 1010 and "IRGAFOS" (registered trademark) 168, respectively, available from Ciba Specialty Chemicals K. K. as an antioxidant.
The chip of the polypropylene resin A and B was fed into separate single-screw extruders and melt-extruded at 220°C. After foreign matter was removed through a sintered filter with a 25 μm cut-off, the resin was layered in a multi-manifold type A/B/A composite T-die at a thickness ratio of 1/2/1, discharged onto a casting drum with a controlled surface temperature of 120°C, and cast so as to be in contact with the drum for 15 seconds. While bringing the resin into close contact with the drum by blowing hot air heated to 120°C from the side of the non-drum surface of the film using an air knife, the resin was formed into a sheet shape to obtain a non-stretched sheet.

The non-stretched sheet obtained was passed through a group of rollers maintained at 105°C for preheating, passed between the rollers that were maintained at 105°C and provided with a difference in peripheral velocity, and stretched 5-fold in the longitudinal direction at 105°C. Thereafter, the sheet was once cooled, introduced to a tenter with both ends held by clips to be preheated at 150°C, and stretched 7-fold in the transverse direction at 150°C.

Then, in the tenter, the sheet was heat-set at 160°C while being subjected to 5% relaxation in the transverse direction. After being cooled uniformly and slowly, the sheet was cooled to room temperature and rolled up to obtain a porous film with a thickness of 25 μm.

The porous film obtained had such high absorption properties that the absorbing height of an electrolysis solution in the transverse direction after 30 minutes was 18.0 mm, a resistance of air permeability of 180 sec/100 ml, a porosity of 75%, such excellent battery properties that the output characteristics was A, such a high strength that the tensile strength at break in the machine direction was 70 MPa, and excellent workability of A. The A-layer was a absorption layer, and the B-layer was a strength retaining layer. In the A-layer, the absorbing height of an electrolysis solution in the transverse direction after 30 minutes was 20.0 mm, and the tensile strength at break in the machine direction was 55 MPa; in the B-layer, the absorbing height of an electrolysis solution in the transverse direction after 30 minutes was 8.0 mm, and the tensile strength at break in the machine direction was 85 MPa.

(Example 2)

The same operation as in Example 1 was performed except that the lamination thickness ratio was changed to 1/5/1 to obtain a porous film with a thickness of 25 μm. Each physical property value is shown in Table 1 and Table 2.
The porous film obtained had such high absorption properties that the absorbing height of an electrolysis solution in the transverse direction after 30 minutes was 16.0 mm, a resistance of air permeability of 220 sec/100 ml, a porosity of 72%, such excellent battery properties that the output characteristics was A, such a high strength that the tensile strength at break in the machine direction was 74 MPa, and excellent workability of A. The A-layer was a absorption layer, and the B-layer was a strength retaining layer. In the A-layer, the absorbing height of an electrolysis solution in the transverse direction after 30 minutes was 19.0 mm, and the tensile strength at break in the machine direction was 52 MPa; in the B-layer, the absorbing height of an electrolysis solution in the transverse direction after 30 minutes was 7.5 mm, and the tensile strength at break in the machine direction was 88 MPa.

(Example 3)

The same operation as in Example 1 was performed except that the lamination thickness ratio was changed to 1/10/1 to obtain a porous film with a thickness of 25 μm. Each physical property value is shown in Table 1 and Table 2.
The porous film obtained had such high absorption properties that the absorbing height of an electrolysis solution in the transverse direction after 30 minutes was 14.5 mm, a resistance of air permeability of 250 sec/100 ml, a porosity of 69%, such excellent battery properties that the output characteristics was A, such a high strength that the tensile strength at break in the machine direction was 77 MPa, and excellent workability of A. The A-layer was a absorption layer, and the B-layer was a strength retaining layer. In the A-layer, the absorbing height of an electrolysis solution in the transverse direction after 30 minutes was 18.0 mm, and the tensile strength at break in the machine direction was 50 MPa; in the B-layer, the absorbing height of an electrolysis solution in the transverse direction after 30 minutes was 8.0 mm, and the tensile strength at break in the machine direction was 90 MPa.

(Example 4)

The chip of the polypropylene resin A and B was fed into separate single-screw extruders and melt-extruded at 220°C. After foreign matter was removed through a sintered filter with a 25 μm cut-off, the same operation as in Example 1 was performed except that a multi-manifold type B/A/B composite T-die was used to obtain a porous film with a thickness of 25 μm. Each physical property value is shown in Table 1 and Table 2.
The porous film obtained had such high absorption properties that the absorbing height of an electrolysis solution in the transverse direction after 30 minutes was 12.0 mm, a resistance of air permeability of 300 sec/100 ml, a porosity of 74%, such excellent battery properties that the output characteristics was A, such a high strength that the tensile strength at break in the machine direction was 80 MPa, and excellent workability of A. The A-layer was a absorption layer, and the B-layer was a strength retaining layer. In the A-layer, the absorbing height of an electrolysis solution in the transverse direction after 30 minutes was 18.0 mm, and the tensile strength at break in the machine direction was 55 MPa; in the B-layer, the absorbing height of an electrolysis solution in the transverse direction after 30 minutes was 8.5 mm, and the tensile strength at break in the machine direction was 89 MPa.

(Example 5)

The same operation as in Example 1 was performed except that 90 parts by mass of the chip of the polypropylene resin A and 10 parts by mass of "Umex" (registered trademark) 1010 (maleic anhydride-modified polypropylene resin) available from Sanyo Chemical Industries, Ltd. were fed into a single-screw extruder for the A-layer and that the polypropylene resin B was fed into a single-screw extruder for the B-layer to obtain a porous film with a thickness of 25 μm. Each physical property value is shown in Table 1 and Table 2.
The porous film obtained had such high absorption properties that the absorbing height of an electrolysis solution in the transverse direction after 30 minutes was 19.0 mm, a resistance of air permeability of 350 sec/100 ml, a porosity of 67%, such excellent battery properties that the output characteristics was A, such a high strength that the tensile strength at break in the machine direction was 82 MPa, and excellent workability of A. The A-layer was a absorption layer, and the B-layer was a strength retaining layer. In the A-layer, the absorbing height of an electrolysis solution in the transverse direction after 30 minutes was 24.0 mm, and the tensile strength at break in the machine direction was 60 MPa; in the B-layer, the absorbing height of an electrolysis solution in the transverse direction after 30 minutes was 8.0 mm, and the tensile strength at break in the machine direction was 87 MPa.

(Example 6)

The same operation as in Example 1 was performed except that the porous film obtained in Example 1 was corona treated on both sides under treatment conditions of 40 W·min/m2 per side under a mixed gas atmosphere of 50% of carbonic acid gas and 50% of nitrogen gas.

The porous film obtained had such high absorption properties that the absorbing height of an electrolysis solution in the transverse direction after 30 minutes was 20.0 mm, a resistance of air permeability of 210 sec/100 ml, a porosity of 73%, such excellent battery properties that the output characteristics was A, such a high strength that the tensile strength at break in the machine direction was 65 MPa, and excellent workability of A. The A-layer was a absorption layer, and the B-layer was a strength retaining layer. In the A-layer, the absorbing height of an electrolysis solution in the transverse direction after 30 minutes was 26.0 mm, and the tensile strength at break in the machine direction was 50 MPa; in the B-layer, the absorbing height of an electrolysis solution in the transverse direction after 30 minutes was 9.0 mm, and the tensile strength at break in the machine direction was 90 MPa.

(Example 7)

First, the composition below was compounded at 300°C using a twin-screw extruder to prepare a chip of resins C and D.

<Polypropylene resin C>

Ninety-four parts by mass of a homopolypropylene PP-1; 1 part by mass of a high melt strength polypropylene resin HMS-PP; and 5 parts by mass of an ethylene-octene-1 copolymer PE; in addition thereto, 0.1 parts by mass of Nu-100 available from New Japan Chemical Co., Ltd. as a β-crystal nucleating agent, and further 0.15 parts by mass and 0.1 parts by mass of "IRGANOX" (registered trademark) 1010 and "IRGAFOS" (registered trademark) 168, respectively, available from Ciba Specialty Chemicals K. K. as an antioxidant.

<Polypropylene resin D>

Ninety-nine parts by mass of a homopolypropylene PP-1, 2 parts by mass of a high melt strength polypropylene resin HMS-PP, 0.1 parts by mass of Nu-100 available from New Japan Chemical Co., Ltd. as a β-crystal nucleating agent, and further 0.15 parts by mass and 0.1 parts by mass of "IRGANOX" (registered trademark) 1010 and "IRGAFOS" (registered trademark) 168, respectively, available from Ciba Specialty Chemicals K. K. as an antioxidant.

The chip of the polypropylene resin C and D was fed into separate single-screw extruders and melt-extruded at 220°C. After foreign matter was removed through a sintered filter with a 25 μm cut-off, the resin was layered in a multi-manifold type C/D/C composite T-die at a thickness ratio of 1/2/1, discharged onto a casting drum with a controlled surface temperature of 120°C, and cast so as to be in contact with the drum for 15 seconds. While bringing the resin into close contact with the drum by blowing hot air heated to 120°C from the side of the non-drum surface of the film using an air knife, the resin was formed into a sheet shape to obtain a non-stretched sheet.

The non-stretched sheet obtained was passed through a group of rollers maintained at 105°C for preheating, passed between the rollers that were maintained at 105°C and provided with a difference in peripheral velocity, and stretched 4.5-fold in the longitudinal direction at 125°C. Thereafter, the sheet was once cooled, introduced to a tenter with both ends held by clips to be preheated at 150°C, and stretched 7-fold in the transverse direction at 150°C. Then, in the tenter, the sheet was heat-set at 160°C while being subjected to 5% relaxation in the transverse direction. After being cooled uniformly and slowly, the sheet was cooled to room temperature and rolled up to obtain a porous film with a thickness of 25 μm.

The porous film obtained had such high absorption properties that the absorbing height of an electrolysis solution in the transverse direction after 30 minutes was 10.5 mm, a resistance of air permeability of 380 sec/100 ml, a porosity of 58%, such excellent battery properties that the output characteristics was C, such a high strength that the tensile strength at break in the machine direction was 90 MPa, and excellent workability of B. The A-layer was a absorption layer, and the B-layer was a strength retaining layer. In the A-layer, the absorbing height of an electrolysis solution in the transverse direction after 30 minutes was 16.0 mm, and the tensile strength at break in the machine direction was 65 MPa; in the B-layer, the absorbing height of an electrolysis solution in the transverse direction after 30 minutes was 6.5 mm, and the tensile strength at break in the machine direction was 95 MPa.

(Example 8)

The chip of the polypropylene resin A and B was fed into separate single-screw extruders and melt-extruded at 220°C. After foreign matter was removed through a sintered filter with a 25 μm cut-off, the resin was layered in a multi-manifold type A/B/A composite T-die at a thickness ratio of 1/2/1, discharged onto a casting drum with a controlled surface temperature of 120°C, and cast so as to be in contact with the drum for 15 seconds. While bringing the resin into close contact with the drum by blowing hot air heated to 120°C from the side of the non-drum surface of the film using an air knife, the resin was formed into a sheet shape to obtain a non-stretched sheet.

The non-stretched sheet obtained was passed through a group of rollers maintained at 105°C for preheating, passed between the rollers that were maintained at 105°C and provided with a difference in peripheral velocity, and stretched 4-fold in the longitudinal direction at 110°C. Thereafter, the sheet was once cooled, introduced to a tenter with both ends held by clips to be preheated at 150°C, and stretched 5-fold in the transverse direction at 150°C. Then, in the tenter, the sheet was heat-set at 163°C while being subjected to 12% relaxation in the transverse direction. After being cooled uniformly and slowly, the sheet was cooled to room temperature and rolled up to obtain a porous film with a thickness of 25 μm.

The porous film obtained had such high absorption properties that the absorbing height of an electrolysis solution in the transverse direction after 30 minutes was 17.0 mm, a resistance of air permeability of 250 sec/100 ml, a porosity of 60%, such excellent battery properties that the output characteristics was A, such a high strength that the tensile strength at break in the machine direction was 100 MPa, and excellent workability of A. The A-layer was a absorption layer, and the B-layer was a strength retaining layer. In the A-layer, the absorbing height of an electrolysis solution in the transverse direction after 30 minutes was 19.0 mm, and the tensile strength at break in the machine direction was 55 MPa; in the B-layer, the absorbing height of an electrolysis solution in the transverse direction after 30 minutes was 8.0 mm, and the tensile strength at break in the machine direction was 110 MPa.

(Example 9)

The chip of the polypropylene resin B was fed into a single-screw extruder and melt-extruded at 220°C. After foreign matter was removed through a sintered filter with a 25 μm cut-off, the resin was discharged from a T-die onto a casting drum with a controlled surface temperature of 120°C, and cast so as to be in contact with the drum for 15 seconds. While bringing the resin into close contact with the drum by blowing hot air heated to 120°C from the side of the non-drum surface of the film using an air knife, the resin was formed into a sheet shape to obtain a non-stretched sheet.

The non-stretched sheet obtained was passed through a group of rollers maintained at 105°C for preheating, passed between the rollers that were maintained at 105°C and provided with a difference in peripheral velocity, and stretched 5-fold in the longitudinal direction at 105°C. Thereafter, the sheet was once cooled, introduced to a tenter with both ends held by clips to be preheated at 150°C, and stretched 7-fold in the transverse direction at 150°C.

Then, in the tenter, the sheet was heat-set at 160°C while being subjected to 5% relaxation in the transverse direction. After being cooled uniformly and slowly, the sheet was cooled to room temperature and rolled up to obtain a porous film with a thickness of 25 μm. Further, the porous film obtained above was corona treated on both sides under treatment conditions of 40 W·min/m² per side under a mixed gas atmosphere of 50% of carbonic acid gas and 50% of nitrogen gas.

The porous film obtained had such high absorption properties that the absorbing height of an electrolysis solution in the transverse direction after 30 minutes was 10.0 mm, a resistance of air permeability of 390 sec/100 ml, a porosity of 57%, such excellent battery properties that the output characteristics was C, such a high strength that the tensile strength at break in the machine direction was 92 MPa, and excellent workability of A.

(Comparative Example 1)

The same operation as in Example 1 was performed except that the polypropylene resin A was fed into a single-screw extruder, melt-extruded at 220°C, and discharged from a T-die onto a casting drum with a controlled surface temperature of 120°C after removing foreign matter through a sintered filter with a 25 μm cut-off to obtain a porous film with a thickness of 25 μm. Each physical property value is shown in Table 1 and Table 2.

The porous film obtained had such high absorption properties that the absorbing height of an electrolysis solution in the transverse direction after 30 minutes was 20.0 mm, a resistance of air permeability of 90 sec/100 ml, a porosity of 80%, and such excellent battery properties that the output characteristics was A but had such insufficient strength that the tensile strength at break in the machine direction was 55 MPa and also insufficient workability of C.

(Comparative Example 2)

The same operation as in Example 1 was performed except that the polypropylene resin B was fed into a single-screw extruder, melt-extruded at 220°C, and discharged from a T-die onto a casting drum with a controlled surface temperature of 120°C after removing foreign matter through a sintered filter with a 25 μm cut-off to obtain a porous film with a thickness of 25 μm. Each physical property value is shown in Table 1 and Table 2.

The porous film obtained had such a high strength that the tensile strength at break in the machine direction was 90 MPa and excellent workability of A but had an insufficient absorbing height of an electrolysis solution in the transverse direction after 30 minutes of 8.5 mm and insufficient output characteristics of D.

(Comparative Example 3)

Commercially available "Celgard" (registered trademark) 2500 from Celgard, LLC. was used as Comparative Example 3. "Celgard" (registered trademark) 2500 is a porous polypropylene film obtained by using the lamella stretching method.

This porous film had such a high strength that the tensile strength at break in the machine direction was 120 MPa and excellent workability of A but had such insufficient absorption properties that the absorbing height of an electrolysis solution in the transverse direction after 30 minutes was 5.0 mm and insufficient output characteristics of D.

[Table 1]

| | Absorbing height in TD measured after 30 min. from the start of the absorption of the electrolysis solution (mm) | | | Ratio of the absorbing height in TD to the absorbing height in MD, both are measured after 30 min. from the start of the absorption of the electrolysis solution | Absorbing height in TD measured after 1 min. from the start of the absorption of the electrolysis solution (mm) | | | Ratio of the absorbing height in TD to the absorbing height in MD, both are measured after 1 min. from the start of the absorption of the electrolysis solution | Tensile strength at break in MD (MPa) | | |
|---|---|---|---|---|---|---|---|---|---|---|---|
| | Porous film | A-layer | B-layer | | Porous film | A-layer | B-layer | | Porous film | A-layer | B-layer |
| Example 1 | 18.0 | 20.0 | 8.0 | 1.0 | 10.0 | 15.0 | 2.0 | 1.0 | 70 | 55 | 85 |
| Example 2 | 16.0 | 19.0 | 7.5 | 0.9 | 8.5 | 13.5 | 1.8 | 0.9 | 74 | 52 | 88 |
| Example 3 | 14.5 | 18.0 | 8.0 | 0.9 | 6.0 | 12.5 | 2.0 | 0.9 | 77 | 50 | 90 |
| Example 4 | 12.0 | 18.0 | 8.5 | 0.9 | 4.0 | 12.0 | 2.3 | 0.9 | 80 | 55 | 89 |
| Example 5 | 19.0 | 24.0 | 8.0 | 0.9 | 12.0 | 16.0 | 2.1 | 0.9 | 82 | 60 | 87 |
| Example 6 | 20.0 | 26.0 | 9.0 | 1.0 | 13.0 | 17.0 | 2.5 | 1.0 | 65 | 50 | 90 |
| Example 7 | 10.5 | 16.0 | 6.5 | 0.9 | 3.0 | 10.0 | 1.5 | 0.9 | 90 | 65 | 95 |
| Example 8 | 17.0 | 19.0 | 8.0 | 1.0 | 9.0 | 14.0 | 2.0 | 1.0 | 100 | 55 | 110 |
| Example 9 | 10.0 | - | - | 0.9 | 3.0 | - | - | 0.9 | 92 | - | - |
| Comparative Example 1 | 20.0 | - | - | 1.0 | 15.0 | - | - | 1.0 | 55 | - | - |
| Comparative Example 2 | 8.5 | - | - | 1.0 | 2.0 | - | - | 1.0 | 90 | - | - |

(continued)

| | Absorbing height in TD measured after 30 min. from the start of the absorption of the electrolysis solution (mm) | | | Ratio of the absorbing height in TD to the absorbing height in MD, both are measured after 30 min. from the start of the absorption of the electrolysis solution | Absorbing height in TD measured after 1 min. from the start of the absorption of the electrolysis solution (mm) | | | Ratio of the absorbing height in TD to the absorbing height in MD, both are measured after 1 min. from the start of the absorption of the electrolysis solution | Tensile strength at break in MD (MPa) | | |
|---|---|---|---|---|---|---|---|---|---|---|---|
| | Porous film | A-layer | B-layer | | Porous film | A-layer | B-layer | | Porous film | A-layer | B-layer |
| Comparative Example 3 | 5.0 | - | - | 1.7 | 0.1 | - | - | 10.0 | 120 | - | - |
| In Table 1, "TD" means transverse direction and "MD" means machine direction. | | | | | | | | | | | |

[Table 2]

| | Resistance of air permeability (sec/100ml) | Prosity (%) | β-crystal formability (%) | Output characteristics | Capacity prioperties | Cycle characteristics | Workability of battery | Permeability of electrolysis |
|---|---|---|---|---|---|---|---|---|
| Example 1 | 180 | 75 | 68 | A | A | A | A | A |
| Example 2 | 220 | 72 | 65 | A | B | A | A | B |
| Example 3 | 250 | 69 | 64 | B | B | B | A | B |
| Example 4 | 300 | 74 | 67 | C | B | B | A | C |
| Example 5 | 350 | 67 | 60 | B | A | A | A | A |
| Example 6 | 210 | 73 | 60 | A | A | A | B | A |
| Example 7 | 380 | 58 | 52 | C | C | B | A | C |
| Example 8 | 250 | 60 | 67 | A | A | A | A | A |
| Example 9 | 390 | 56 | 68 | C | C | B | A | C |
| Comparative Example 1 | 90 | 80 | 70 | A | A | A | C | A |
| Comparative Example 2 | 500 | 65 | 70 | D | C | C | A | D |
| Comparative Example 3 | 200 | 40 | 0 | D | D | C | A | D |

INDUSTRIAL APPLICABILITY

The porous film according to the present invention provides a porous film that has excellent absorption properties for an electrolysis solution and, when used as a separator, has excellent battery properties and workability.

DESCRIPTION OF SYMBOLS

1: Porous film
2: Machine direction or transverse direction
3: Mixed solvent
4: Mixed solvent-permeated portion
5: Absorbing height of electrolysis solution

**Claims**

1. A porous film having an absorbing height of an electrolysis solution of 10 to 60 mm in at least one direction of the film's machine direction or transverse direction, wherein the absorbing height being measured after 30 minutes from the start of the absorption of the electrolysis solution, and a tensile strength at break in the machine direction of not less than 65 MPa.

2. The porous film according to claim 1, comprising a polyolefin resin.

3. The porous film according to claim 1 or 2, having a ratio of the absorbing height in the film's transverse direction to the absorbing height in the machine direction of 0.7 to 1.3, wherein the absorbing height being measured after 30 minutes from the start of the absorption of the electrolysis solution.

4. The porous film according to any one of claims 1 to 3, having an absorbing height of an electrolysis solution of 3 to 60 mm in at least one direction of the film's machine direction or transverse direction, the absorbing height being measured after 1 minute from the start of the absorption of the electrolysis solution.

5. The porous film according to any one of claims 1 to 4, wherein the porous film has a laminated constitution comprising a surface layer and an inner layer, wherein said surface layer is an absorption layer having an absorbing height of an electrolysis solution of 15 to 60 mm in at least one direction of the film's machine direction or transverse direction, the absorbing height being measured after 30 minutes from the start of the absorption of the electrolysis solution, and said inner layer is a strength retaining layer.

6. The porous film according to any one of claims 1 to 5, having a resistance of air permeability of 10 to 400 sec/100 ml.

7. The porous film according to any one of claims 1 to 6, having a porosity of 50 to 90%.

8. The porous film according to any one of claims 2 to 7, wherein the $\beta$-crystal formability of the polyolefin resin is 50 to 90%.

9. The porous film according to any one of claims 1 to 8, having a tensile strength at break in the machine direction of not less than 70 MPa.

10. The porous film according to any one of claims 1 to 9 which is used as an electric storage device separator.

11. An electric storage device which uses the porous film according to claim 10 as an electric storage device separator.

12. The electric storage device according to claim 11, wherein the electric storage device is a lithium ion battery.

[Figure 1]

| | | |
|---|---|---|
| **INTERNATIONAL SEARCH REPORT** | International application No. | |
| | PCT/JP2010/066297 | |

**A. CLASSIFICATION OF SUBJECT MATTER**
*C08J9/00*(2006.01)i, *H01G9/02*(2006.01)i, *H01M2/16*(2006.01)i

According to International Patent Classification (IPC) or to both national classification and IPC

**B. FIELDS SEARCHED**

Minimum documentation searched (classification system followed by classification symbols)
C08J9/00, H01G9/02, H01M2/16

Documentation searched other than minimum documentation to the extent that such documents are included in the fields searched
Jitsuyo Shinan Koho          1922–1996   Jitsuyo Shinan Toroku Koho   1996–2010
Kokai Jitsuyo Shinan Koho    1971–2010   Toroku Jitsuyo Shinan Koho   1994–2010

Electronic data base consulted during the international search (name of data base and, where practicable, search terms used)
WPI

**C. DOCUMENTS CONSIDERED TO BE RELEVANT**

| Category* | Citation of document, with indication, where appropriate, of the relevant passages | Relevant to claim No. |
|---|---|---|
| X | WO 2007/046226 A1  (Toray Industries, Inc.), 26 April 2007 (26.04.2007), claims; paragraphs [0024], [0028], [0032], [0051], [0054], [0059], [0063], [0074], [0076], [0088] to [0094], [0109], [0214] & US 2009/0219672 A1    & EP 1950821 A1 | 1-12 |
| A | JP 2008-201814 A  (Toray Industries, Inc.), 04 September 2008 (04.09.2008), entire text (Family: none) | 1-12 |
| A | JP 1-221440 A  (Toray Industries, Inc.), 04 September 1989 (04.09.1989), entire text (Family: none) | 1-12 |

☒  Further documents are listed in the continuation of Box C.          ☐   See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| | |
|---|---|
| Date of the actual completion of the international search | Date of mailing of the international search report |
| 02 November, 2010 (02.11.10) | 16 November, 2010 (16.11.10) |

| | |
|---|---|
| Name and mailing address of the ISA/ | Authorized officer |
| Japanese Patent Office | |
| Facsimile No. | Telephone No. |

Form PCT/ISA/210 (second sheet) (July 2009)

**INTERNATIONAL SEARCH REPORT**

| International application No. |
|---|
| PCT/JP2010/066297 |

C (Continuation).   DOCUMENTS CONSIDERED TO BE RELEVANT

| Category* | Citation of document, with indication, where appropriate, of the relevant passages | Relevant to claim No. |
|---|---|---|
| A | JP 7-118429 A  (Tonen Chemical Corp.),<br>09 May 1995 (09.05.1995),<br>entire text<br>(Family: none) | 1-12 |
| A | JP 9-255804 A  (Tokuyama Corp.),<br>30 September 1997 (30.09.1997),<br>entire text<br>(Family: none) | 1-12 |
| A | JP 63-199742 A  (Toray Industries, Inc.),<br>18 August 1988 (18.08.1988),<br>entire text<br>(Family: none) | 1-12 |

Form PCT/ISA/210 (continuation of second sheet) (July 2009)

**EP 2 500 374 A1**

**Patent documents cited in the description**

- JP 11130899 A
- JP 11130900 A
- JP 1103634 A
- JP 2008248231 A
- JP 60000052 A
- JP 2006269359 A
- JP 2007273443 A
- JP 2008106237 A